# EUROPEAN PATENT APPLICATION

(11) **EP 4 393 976 A1**
(43) Date of publication of application: **03.07.2024**
(21) Application number: 22861049.9
(22) Date of filing: 28.07.2022
(51) Int. Cl.: C08G 63/16, C08L 67/02, C08L 101/16

(54) **PLASTICIZING AGENT FOR BIODEGRADABLE RESIN, BIODEGRADABLE RESIN COMPOSITION, AND MOLDED ARTICLE THEREOF**

(30) Priority: 24.08.2021 JP 2021136182
(71) Applicant: DIC Corporation, Tokyo 174-8520 (JP)
(72) Inventor: YAMASAKI Masaru, Ichihara-shi, Chiba 290-8585 (JP); NOGUCHI Takafumi, Ichihara-shi, Chiba 290-8585 (JP); TOKORO Hiroki, Ichihara-shi, Chiba 290-8585 (JP)
(74) Representative: Kraus & Lederer PartGmbB
(86) International application number: PCT/JP2022/029051
(87) International publication number: WO 2023/026758

(57) **Abstract**

Provided is a plasticizing agent capable of sufficiently plasticizing a biodegradable resin and imparting excellent heat resistance to a molded article of a biodegradable resin composition. Specially, the plasticizing agent is a plasticizing agent for biodegradable resins, which is a polyester represented by the following formula (1) or formula (2) (In the formulae (1) and (2), B₁₁ represents an aliphatic monocarboxylic acid residue having 7 to 20 carbon atoms; B₁₂ represents an aliphatic monocarboxylic acid residue having 7 to 20 carbon atoms; B₂₁ represents an aliphatic monoalcohol residue having 6 to 10 carbon atoms; B₂₂ represents an aliphatic monoalcohol residue having 6 to 10 carbon atoms; G represents an alkylene glycol residue having 3 to 10 carbon atoms or an oxyalkylene glycol residue having 3 to 10 carbon atoms; A represents an alkylene dicarboxylic acid residue having 6 to 12 carbon atoms; and m and n each represent the number of repeating units enclosed in parentheses.)

## Description

### TECHNICAL FIELD

The present invention relates to a plasticizing agent for a biodegradable resin, a biodegradable resin composition, and a molded article thereof.

### BACKGROUND ART

General-purpose plastics such as vinyl chloride resin (PVC) are used in a wide range of applications, and such general-purpose plastics are generally used after being made flexible by adding a plasticizing agent. However, since general-purpose plastics are not easily decomposed, from the viewpoint of emphasizing "sustainability" in recent years, there is a move to switch from general-purpose plastics to biodegradable resins.

Since biodegradable resins generally have a higher polarity than general-purpose plastics, there is a demand for plasticizing agents suitable for biodegradable resins, which are different from conventional plasticizing agents for general-purpose plastics. In order to meet this need, various plasticizing agents for biodegradable resins have been proposed (for example, PTLs 1 to 3).

### CITATION LIST

### PATENT LITERATURE

PTL 1: JP 2018-009107 A
PTL 2: JP 2018-100324 A
PTL 3: WO 2014/054278

### SUMMARY OF INVENTION

### TECHNICAL PROBLEM

When the plasticizing agent disclosed in PTLs 1 to 3 is added to a biodegradable resin, a plasticizing effect is obtained, but the glass transition temperature of the biodegradable resin composition is lowered, and the heat resistance may be impaired.

An object of the invention is to provide a plasticizing agent capable of sufficiently plasticizing a biodegradable resin and imparting excellent heat resistance to a molded article of a biodegradable resin composition.

### SOLUTION TO PROBLEM

The invention relates to a plasticizing agent for a biodegradable resin, which is a polyester represented by the following formula (1) or (2).

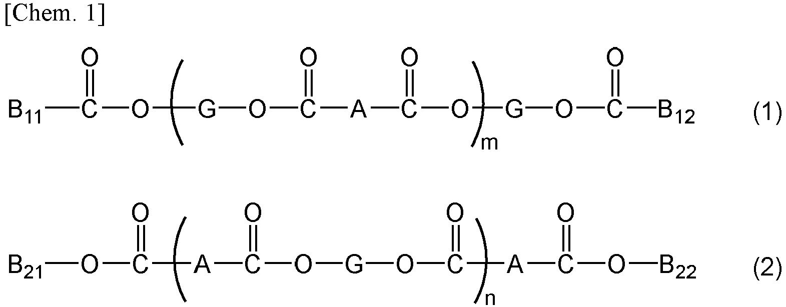

(In the formulae (1) and (2),
B₁₁ represents an aliphatic monocarboxylic acid residue having 7 to 20 carbon atoms;
B₁₂ represents an aliphatic monocarboxylic acid residue having 7 to 20 carbon atoms;
B₂₁ represents an aliphatic monoalcohol residue having 6 to 10 carbon atoms;
B₂₂ represents an aliphatic monoalcohol residue having 6 to 10 carbon atoms;
G represents an alkylene glycol residue having 3 to 10 carbon atoms or an oxyalkylene glycol residue having 3 to 10 carbon atoms;
A represents an alkylene dicarboxylic acid residue having 6 to 12 carbon atoms;
m and n each represent the number of repeating units enclosed in parentheses, and m and n each independently represent an integer of 1 or more; and
A and G may be the same or different for each repeating unit enclosed in parentheses.)

### ADVANTAGEOUS EFFECTS OF INVENTION

According to the invention, a plasticizing agent capable of sufficiently plasticizing a biodegradable resin and imparting excellent heat resistance to a molded article of a biodegradable resin composition can be provided.

### DESCRIPTION OF EMBODIMENTS

Hereinafter, an embodiment of the invention will be described. The invention is not limited to the following embodiment, and can be implemented with appropriate modifications within a range that does not impair the effects of the invention.

### [Plasticizing Agent for Biodegradable Resin]

The plasticizing agent for biodegradable resin of the invention is a polyester represented by the following formula (1) or formula (2). Hereinafter, the polyester represented by the following formula (1) and the polyester represented by the following formula (2) may be collectively referred to as "the polyester of the invention".

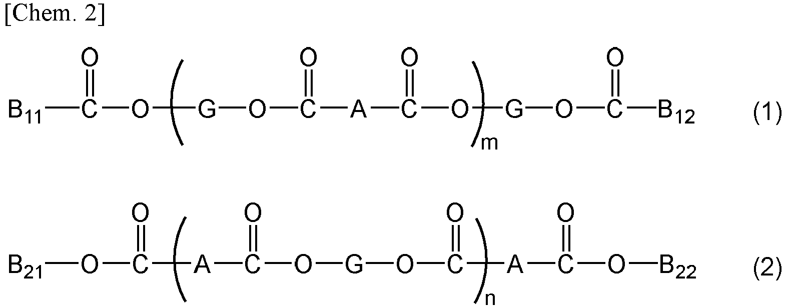

(In the formulae (1) and (2),
B₁₁ represents an aliphatic monocarboxylic acid residue having 7 to 20 carbon atoms;
B₁₂ represents an aliphatic monocarboxylic acid residue having 7 to 20 carbon atoms;
B₂₁ represents an aliphatic monoalcohol residue having 6 to 10 carbon atoms;
B₂₂ represents an aliphatic monoalcohol residue having 6 to 10 carbon atoms;
G represents an alkylene glycol residue having 3 to 10 carbon atoms or an oxyalkylene glycol residue having 3 to 10 carbon atoms;
A represents an alkylene dicarboxylic acid residue having 6 to 12 carbon atoms;
m and n each represent the number of repeating units enclosed in parentheses, and m and n each independently represent an integer of 1 or more; and
A and G may be the same or different for each repeating unit enclosed in parentheses.)

In the invention, the term "carboxylic acid residue" refers to an organic group remaining after removing the carboxy group of a carboxylic acid. The number of carbon atoms of the "carboxylic acid residue" does not include the carbon atoms in the carboxy group.

In the invention, the term "alcohol residue" refers to an organic group remaining after removing a hydroxy group from an alcohol.

In the invention, the term "glycol residue" refers to an organic group remaining after removing a hydroxy group from a glycol.

Examples of the aliphatic monocarboxylic acid residue having 7 to 20 carbon atoms of B₁₁ and B₁₂ include a caprylic acid residue, a capric acid residue, a lauric acid residue, a myristic acid residue, a pentadecyl acid residue, a palmitic acid residue, a margaric acid residue, a stearic acid residue, and an arachidic acid residue.

The aliphatic monocarboxylic acid residue having 7 to 20 carbon atoms of B₁₁ and B₁₂ may have a secondary hydroxy group and/or a tertiary hydroxy group in the aliphatic chain, and includes a 12-hydroxystearic acid residue and the like.

B₁₁ and B₁₂ are each preferably an aliphatic monocarboxylic acid residue having 11 to 17 carbon atoms, and more preferably a lauric acid residue, a myristic acid residue, a palmitic acid residue, or a stearic acid residue.

When at least one of B₁₁ and B₁₂ of the polyester represented by the formula (1) is an aliphatic monocarboxylic acid residue having 11 to 17 carbon atoms, a sufficient effect as a plasticizing agent for a biodegradable resin can be exhibited.

Examples of the aliphatic monoalcohol residue having 6 to 10 carbon atoms of B₂₁ and B₂₂ include normal octanol, 2-ethylhexanol, and isononyl alcohol.

B₂₁ and B₂₂ are each preferably an aliphatic monoalcohol residue having 7 to 10 carbon atoms, and more preferably an aliphatic monoalcohol residue having 8 or 9 carbon atoms.

Examples of the alkylene dicarboxylic acid residue having 6 to 12 carbon atoms of A include an azelaic acid residue, a sebacic acid residue, a dodecane dicarboxylic acid residue, a cyclohexane dicarboxylic acid residue, and a hexahydrophthalic acid residue.

The alkylene dicarboxylic acid residue having 6 to 12 carbon atoms of A is preferably an alkylene dicarboxylic acid residue having 7 to 10 carbon atoms, more preferably an azelaic acid residue, a sebacic acid residue, or a dodecanedioic acid residue, and still more preferably a sebacic acid residue.

Examples of the alkylene glycol residue having 3 to 10 carbon atoms of G include a 1,2-propylene glycol residue, a 1,3-propylene glycol residue, a 1,2-butanediol residue, a 1,3-butanediol residue, a 2-methyl-1,3-propanediol residue, a 1,4-butanediol residue, a 1,5-pentanediol residue, a 2,2-dimethyl-1,3-propanediol (neopentyl glycol) residue, a 2,2-diethyl-1,3-propanediol (3,3-dimethylolpentane) residue, a 2-n-butyl-2-ethyl-1,3-propanediol (3,3-dimethylolheptane) residue, a 3-methyl-1,5-pentanediol residue, a 1,6-hexanediol residue, a cyclohexanedimethanol residue, a 2,2,4-trimethyl-1,3-pentanediol residue, a 2-ethyl-1,3-hexanediol residue, a 2-methyl-1,8-octanediol residue, a 1,9-nonanediol residue, a 1,10-decanediol residue, and a diethylene glycol residue.

The alkylene glycol residue having 3 to 10 carbon atoms of G is preferably an alkylene glycol residue having 3 to 6 carbon atoms, and more preferably a 1,2-propanediol residue, a 1,3-butanediol residue, a 1,4-butanediol residue, a neopentyl glycol residue, a 2-methyl-1,3-propanediol residue, a 3-methyl-1,5-pentanediol residue, a 1,6-hexanediol residue, or a diethylene glycol residue.

The oxyalkylene glycol residue having 3 to 10 carbon atoms of G is, for example, a residue obtained by replacing one carbon atom of the alkylene glycol residue having 3 to 10 carbon atoms with an oxygen atom, and examples thereof include a diethylene glycol residue, a triethylene glycol residue, a tetraethylene glycol residue, a dipropylene glycol residue, and a tripropylene glycol residue.

The oxyalkylene glycol residue having 3 to 10 carbon atoms of G is preferably an oxyalkylene glycol residue having 4 to 6 carbon atoms, and more preferably a diethylene glycol residue or a triethylene glycol residue.

The upper limit of each of m and n is not particularly limited, but is, for example, 15.

The polyester of the invention may be used, for example, as a mixture of polyester resins in which m in the formula (1) is different from each other, and/or as a mixture of polyester resins in which n in the formula (2) is different from each other. At this time, the average value of m is, for example, in a range of 1 to 9, and the average value of n is, for example, in a range of 1 to 9.

Note that the average values of m and n can be confirmed from the number average molecular weight of the polyester.

The number average molecular weight (Mn) of the polyester of the invention is, for example, 500 to 5,000, preferably 1,000 to 3,500, more preferably 1,200 to 2,800, and still more preferably 1,600 to 2,400.

In a case where the number average molecular weight (Mn) of the polyester of the invention is within the above range, it is possible to obtain a polyester-based plasticizing agent having excellent heat resistance, cold resistance, and non-migration property.

The number average molecular weight (Mn) is a value in terms of polystyrene based on gel permeation chromatography (GPC) measurement, and is measured by the method described in Examples.

The acid value of the polyester of the invention is preferably 2.0 or less, and more preferably 1.0 or less.

The hydroxyl value of the polyester of the invention is preferably 15 or less, and more preferably 10 or less.

The viscosity of the polyester of the invention is preferably 7,000 mPa s or less, and more preferably 5000 mPa·s or less.

The acid value, hydroxyl value and viscosity of the polyester of the invention are confirmed by the methods described in Examples.

The properties of the polyester of the invention vary depending on the number average molecular weight, composition, and the like, but are usually liquid, solid, paste, or the like at room temperature.

The polyester of the invention is obtained by using, for example, a reaction raw material containing one or more selected from monocarboxylic acid, monoalcohol, glycol, and dicarboxylic acid. Here, the reaction raw material means a raw material constituting the polyester of the invention, and does not include a solvent or a catalyst which does not constitute the polyester.

The method for producing the polyester of the invention is not particularly limited, and the polyester can be produced by a known method, and can be produced by the following production method.

The reaction raw materials of the polyester of the invention may include one or more selected from monocarboxylic acids, monoalcohols, glycols, and dicarboxylic acids, and may include other raw materials.

In the reaction raw materials of the polyester of the invention, one or more selected from monocarboxylic acids, monoalcohols, glycols, and dicarboxylic acids preferably account for 90% by mass or more of the total amount of the reaction raw materials, and the reaction raw materials more preferably consist of one or more selected from monocarboxylic acids, monoalcohols, glycols, and dicarboxylic acids.

The monocarboxylic acid to be used in the production of the polyester of the invention is a monocarboxylic acid corresponding to an aliphatic monocarboxylic acid residue having 7 to 20 carbon atoms of B₁₁ and B₁₂, and the monocarboxylic acid to be used may be used alone or in combination of two or more kinds thereof.

The monoalcohol to be used in the production of the polyester of the invention is a monoalcohol corresponding to an aliphatic monoalcohol residue having 6 to 10 carbon atoms of B₂₁ and B₂₂, and the monoalcohol to be used may be used alone or in combination of two or more kinds thereof.

The glycol to be used in the production of the polyester of the invention is a glycol corresponding to an alkylene glycol residue having 3 to 10 carbon atoms or an oxyalkylene glycol residue having 3 to 10 carbon atoms of G, and the glycol to be used may be used alone or in combination of two or more kinds thereof.

The dicarboxylic acid to be used in the production of the polyester of the invention is a dicarboxylic acid corresponding to an alkylene dicarboxylic acid residue having 6 to 12 carbon atoms of A, and the dicarboxylic acid to be used may be used alone or in combination of two or more kinds thereof.

The polyester represented by the formula (1), in which m is 1 or more, can be obtained, for example, by the following methods.

Method 1: A method in which a monocarboxylic acid, a dicarboxylic acid, and a glycol constituting each residue of the polyester represented by the formula (1) are charged at once, and these are reacted.

Method 2: A method in which a dicarboxylic acid and a glycol constituting each residue of the polyester represented by the formula (1) are reacted under conditions in which the equivalent of a hydroxy group is larger than the equivalent of a carboxy group to obtain a polyester having a hydroxy group at the terminal of the main chain, and then the obtained polyester resin is reacted with a monocarboxylic acid constituting B₁₁ and B₁₂.

The polyester represented by the formula (2), in which n is 1 or more, can be obtained, for example, by the following methods.

Method 3: A method in which a monoalcohol, a dicarboxylic acid, and a glycol constituting each residue of the polyester represented by the formula (2) are charged at once, and these are reacted.

Method 4: A method in which a dicarboxylic acid and a glycol constituting each residue of the polyester represented by the formula (2) are reacted under conditions in which the equivalent of a carboxy group is larger than the equivalent of a hydroxy group to obtain a polyester having a carboxy group at the terminal of the main chain, and then the obtained polyester is reacted with a monoalcohol constituting B₂₁ and B₂₂.

As the aliphatic monocarboxylic acid to be used in the production of the polyester represented by the formula (1), a hydrogenated vegetable oil fatty acid may be used. Examples of the hydrogenated vegetable oil fatty acid include a hydrogenated coconut oil fatty acid, a hydrogenated palm kernel oil fatty acid, a hydrogenated palm oil fatty acid, a hydrogenated olive oil fatty acid, a hydrogenated castor oil fatty acid, and a hydrogenated rapeseed oil fatty acid. These are obtained by hydrolyzing and hydrogenating oil solutions obtained from coconut, palm kernel, palm, olive, castor bean, and rapeseed, respectively, and are mixtures of two or more long-chain aliphatic monocarboxylic acids containing an aliphatic monocarboxylic acid having 8 to 21 carbon atoms.

Furthermore, as the aliphatic monocarboxylic acid used in the production of the polyester represented by the formula (1), the above-mentioned vegetable oil fatty acid which is not hydrogenated may be used within a range that does not impair the effect of the invention. In addition, the vegetable oil fatty acid is not limited to the above.

When the above-mentioned hydrogenated vegetable oil fatty acid is used as the aliphatic monocarboxylic acid used in the production of the polyester represented by the formula (1), the polyester to be obtained is obtained as a mixture of two or more kinds of polyesters represented by the formula (1).

The polyester of the invention is preferably a polyester using an alkylene glycol having 3 to 10 carbon atoms, an alkylene dicarboxylic acid having 8 to 14 carbon atoms, and a hydrogenated vegetable oil fatty acid as reaction raw materials.

In the polyester, when a hydrogenated vegetable oil fatty acid is used as the aliphatic monocarboxylic acid, sebacic acid is used as the alkylene dicarboxylic acid, and one or more selected from the group consisting of 1,2-propanediol, 1,3-butanediol, 1,4-butanediol, neopentyl glycol, and diethylene glycol are used as the alkylene glycol, all of the reaction raw materials can be biomass-derived raw materials.

In the production of the polyester of the invention, the reaction of the reaction raw materials may be an esterification reaction in the presence of an esterification catalyst as necessary, for example, in a temperature range of 180 to 250°C for 10 to 25 hours.

Furthermore, conditions such as temperature and time of the esterification reaction are not particularly limited and may be appropriately set.

Examples of the esterification catalyst include titanium-based catalysts such as tetraisopropyl titanate and tetrabutyl titanate; tin-based catalysts such as dibutyltin oxide; and organic sulfonic acid-based catalysts such as p-toluenesulfonic acid.

The amount of the esterification catalyst to be used may be appropriately set, and is usually in a range of 0.001 to 0.1 parts by mass with respect to 100 parts by mass of the total amount of the reaction raw materials.

### [Biodegradable Resin Composition]

The biodegradable resin composition of the invention contains the plasticizing agent for a biodegradable resin of the invention and a biodegradable resin.

Examples of the biodegradable resin contained in the biodegradable resin composition of the invention include polylactic acid (PLA), polyethylene succinate (PES), polyethylene terephthalate-succinate (PETS), polybutylene succinate (PBS), polybutylene adipate-terephthalate (PBAT), polyethylene adipate-terephthalate (PEAT), polybutylene succinate-terephthalate (PBST), polyethylene succinate-terephthalate (PEST), polybutylene succinate-adipate (PBSA), polybutylene succinate-carbonate (PEC), polybutylene succinate-adipate-terephthalate (PBSAT), polyethylene succinate-adipate terephthalate (PESAT), polytetramethylene adipate-terephthalate (PTMAT), polyhydroxybutyric acid (PHB), polyhydroxybutyric acid-hydroxyhexanoic acid (PHBH), polyhydroxybutyric acid-hydroxyvalerate (PHBV), polycaprolactone (PCL), polycaprolactone-butylene succinate (PCLBS), and cellulose acetate.

The biodegradable resin to be used may be determined depending on the intended use, and the biodegradable resin may be used alone or in combination of two or more kinds thereof.

The biodegradable resin is preferably one or more selected from the group consisting of polylactic acid, polybutylene succinate, polybutylene adipate terephthalate, polyhydroxybutyric acid-hydroxyhexanoic acid, polyhydroxybutyric acid-hydroxyvalerate, polybutylene succinate adipate, and polyethylene terephthalate succinate.

Although the biodegradable resin has been described, the biodegradable resin composition of the invention may contain a non-biodegradable resin within a range that does not impair the effect of the invention.

Specific examples of the non-biodegradable resin include, but are not limited to, polyolefin, polyester, polysulfide, polyvinyl chloride, modified polysulfide, silicone resin, modified silicone resin, acrylic urethane resin, epoxy resin, polyurethane, acrylic resin, polyester, and unsaturated polyester.

The content of the plasticizing agent for a biodegradable resin of the invention in the biodegradable resin composition of the invention is preferably in a range of 1 to 50 parts by mass, more preferably in a range of 1 to 30 parts by mass, still more preferably in a range of 1 to 20 parts by mass, and particularly preferably in a range of 1 to 15 parts by mass, with respect to 100 parts by mass of the biodegradable resin, from the viewpoint of compatibility with the biodegradable resin and the like.

The biodegradable resin composition of the invention may contain a biodegradable resin and the plasticizing agent for a biodegradable resin of the invention, and may contain a plasticizing agent other than the plasticizing agent for a biodegradable resin of the invention (other plasticizing agent), other additives, and the like.

Examples of the other plasticizing agent include a benzoic acid ester such as diethylene glycol dibenzoate; a phthalic acid ester such as dibutyl phthalate (DBP), di-2-ethylhexyl phthalate (DOP), diisononyl phthalate (DINP), diisodecyl phthalate (DIDP), diundecyl phthalate (DUP), and ditridecyl phthalate (DTDP); a terephthalic acid ester such as bis(2-ethylhexyl) terephthalate (DOTP); an isophthalic acid ester such as bis(2-ethylhexyl) isophthalate (DOIP); a pyromellitic acid ester such as tetra-2-ethylhexyl pyromellitic acid (TOPM); an aliphatic dibasic acid ester such as di-2-ethylhexyl adipate (DOA), diisononyl adipate (DINA), diisodecyl adipate (DIDA), di-2-ethylhexyl sebacate (DOS), and diisononyl sebacate (DINS); a phosphoric acid ester such as tri-2-ethylhexyl phosphate (TOP) and tricresyl phosphate (TCP); an alkyl ester of a polyhydric alcohol such as pentaerythritol; a polyester having a molecular weight of 800 to 4,000 synthesized by polyesterification of a dibasic acid such as adipic acid and glycol; an epoxidized ester such as epoxidized soybean oil and epoxidized linseed oil; an alicyclic dibasic acid such as hexahydrophthalic acid diisononyl ester; a fatty acid glycol ester such as dicaprylic acid 1.4-butanediol; acetyl tributyl citrate (ATBC); a chlorinated paraffin obtained by chlorinating paraffin wax or n-paraffin; a chlorinated fatty acid ester such as a chlorinated stearic acid ester; and a higher fatty acid ester such as butyl oleate.

When the other plasticizing agent is used in the biodegradable resin composition of the invention, the content of the other plasticizing agent is, for example, in a range of 10 to 300 parts by mass, and preferably in a range of 20 to 200 parts by mass, with respect to 100 parts by mass of the plasticizing agent for a biodegradable resin of the invention.

Examples of the other additives may include a flame retardant, a stabilizer, a stabilization aid, a colorant, a processing aid, a filler, an antioxidant (aging inhibitor), an ultraviolet absorber, a light stabilizer, a lubricant, an antistatic agent, and a crosslinking aid.

### [Method for Producing Biodegradable Resin Composition]

The method for producing the biodegradable resin composition of the invention is not particularly limited.

For example, the biodegradable resin composition can be obtained by a method in which the biodegradable resin, the plasticizing agent for a biodegradable resin of the invention, and the above-mentioned other additives are melt-kneaded using a melt-kneading machine such as a single-screw extruder, a twin-screw extruder, a Banbury mixer, a Brabender, and various kneaders.

### [Molded Article of Biodegradable Resin Composition]

The biodegradable resin composition of the invention can be molded by various molding methods applied to general-purpose plastics.

Examples of the molding method include compression molding (compression molding, lamination molding, stampable molding), injection molding, extrusion molding and coextrusion molding (film molding by inflation method or T-die method, laminate molding, pipe molding, electric wire/cable molding, profile molding), hot press molding, blow molding (various blow molding), calender molding, solid molding (uniaxial stretching molding, biaxial stretching molding, roll rolling molding, stretch-oriented nonwoven fabric molding, thermoforming (vacuum forming, pressure forming), plastic processing, powder molding (rotational molding), and various nonwoven fabric molding (dry method, bonding method, entangling method, spun bond method, etc.).

Injection molding, extrusion molding, compression molding, or hot press molding is suitably applied. As a specific shape, application to a sheet, a film, or a container is preferable.

The molded article obtained as described above may be subjected to secondary processing. Examples of the secondary processing include embossing, painting, adhesion, printing, metalizing (plating and the like), machining, and surface treatment (antistatic treatment, corona discharge treatment, plasma treatment, photochromism treatment, physical vapor deposition, chemical vapor deposition, coating, and the like).

Since the molded article obtained from the biodegradable resin composition of the invention contains the plasticizing agent for a biodegradable resin of the invention, it can exhibit excellent heat resistance. In addition, since the molded article is composed of a biodegradable resin and is degradable, it is a molded article having a small environmental load.

The molded article obtained from the biodegradable resin composition of the invention is suitably used in a wide range of applications such as packaging materials for packaging liquid substances, powdery or granular substances, or solid substances, agricultural materials, and construction materials.

Specific applications include injection molded articles (for example, trays for fresh foods, containers for fast foods, containers for coffee capsules, cutlery, outdoor leisure products, and the like), extrusion molded articles (for example, films, sheets, fishing lines, fishing nets, vegetation nets, sheets for secondary processing, water-retaining sheets, and the like), and hollow molded articles (bottles and the like).

Applications are not limited to those described above, and can also be used for agricultural films, coating materials, coating materials for fertilizers, seedling pots, laminate films, plates, stretched sheets, monofilaments, nonwoven fabrics, flat yarns, staples, crimped fibers, ribbed tapes, split yarns, composite fibers, blow bottles, shopping bags, garbage bags, compost bags, cosmetics containers, detergent containers, bleach containers, ropes, binding materials, sanitary cover stock materials, cool box, cushion material films, multifilaments, synthetic paper, and surgical threads, sutures, artificial bones, artificial skin, microcapsules, wound dressings, and the like as medical applications.

### EXAMPLES

Hereinafter, the invention will be specifically described by way of Examples and Comparative Examples. Note that the invention is not limited to the following Examples.

In the Examples of the present application, the values of the acid value, the hydroxyl value and the viscosity are values evaluated by the following methods.

### <Method of Measuring Acid Value>

The acid value was measured by a method in accordance with JIS K0070-1992.

### <Method of Measuring Hydroxyl Value>

The hydroxyl value was measured by a method in accordance with JIS K0070-1992.

### <Method of Measuring Viscosity>

The viscosity was measured by a method in accordance with JIS K6901-1986.

In the Examples of the present application, the number average molecular weight of the polyester is a value in terms of polystyrene based on GPC measurement, and the measurement conditions are as follows.

### [GPC Measurement Conditions]

Measurement apparatus: High-Speed GPC Apparatus "HLC-8320GPC" manufactured by Tosoh Corporation
Column: "TSK GURDCOLUMN SuperHZ-L" manufactured by Tosoh Corporation + "TSK gel SuperHZM-M" manufactured by Tosoh Corporation + "TSK gel SuperHZM-M" manufactured by Tosoh Corporation + "TSK gel SuperHZ-2000" manufactured by Tosoh Corporation + "TSK gel SuperHZ-2000" manufactured by Tosoh Corporation
Detector: RI (differential refractometer)
Data processing: "EcoSEC Data Analysis Version 1.07" manufactured by Tosoh Corporation
Column temperature: 40°C
Developing solvent: tetrahydrofuran
Flow rate: 0.35 mL/min
Measurement sample: 7.5 mg of a sample was dissolved in 10 mL of tetrahydrofuran, and the obtained solution was filtered through a microfilter to obtain a measurement sample.
Sample injection amount: 20 µL
Standard sample: The following monodispersed polystyrene having a known molecular weight was used in accordance with the measurement manual of the "HLC-8320GPC".

### (Monodispersed Polystyrene)

"A-300" manufactured by Tosoh Corporation
"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation
"F-288" manufactured by Tosoh Corporation

### (Example 1: Synthesis of Polyester Plasticizing Agent A)

In a reaction vessel, 808 g (4.0 mol) of sebacic acid and 495 g (5.5 mol) of 1,3-butanediol were charged into a four-neck flask with an internal volume of 2 liters equipped with a thermometer, a stirrer, and a reflux condenser, and the temperature was raised stepwise to 220°C while stirring under a nitrogen gas stream. Next, 410 g (2.0 mol) of hydrogenated coconut oil fatty acid and 0.1 g of tetraisopropoxy titanium as an esterification catalyst were added, and the generated water was continuously removed. After the reaction, the residue was distilled off under reduced pressure at the same temperature to obtain polyester plasticizing agent A (number average molecular weight: 1,820, viscosity: 690 mPa·s, acid value: 0.5, hydroxyl value: 6.5).

Note that, the hydrogenated coconut oil fatty acid is a mixture of aliphatic monocarboxylic acids containing 5% by mass of octanoic acid (having 8 carbon atoms), 5% by mass of capric acid (having 10 carbon atoms), 51% by mass of lauric acid (having 12 carbon atoms), 18% by mass of myristic acid (having 14 carbon atoms), 10% by mass of palmitic acid (having 16 carbon atoms), and 11% by mass of octadecanoic acid (having 18 carbon atoms). As the amount of substance of the hydrogenated coconut oil fatty acid which is a mixture, a value calculated from the content and molecular weight of each fatty acid described above was used.

### (Preparation of Biodegradable Resin Composition (1))

A biodegradable resin composition (1) was obtained by mixing 100 parts by mass of polylactic acid ("REVODE110" manufactured by Zhejiang Hisun Biomaterials Co., Ltd.) and 5 parts by mass of the obtained polyester plasticizing agent A. The following evaluation was performed using the obtained biodegradable resin composition (1). The results are shown in Table 1.

### (Tensile Strength)

The obtained biodegradable resin composition (1) was formed into a press sheet having a thickness of 1 mm by a hot press machine. The tensile strength of this sheet was measured in accordance with JIS K7128-3:1998.

### (Crystallization Temperature and Glass Transition Temperature)

The obtained biodegradable resin composition (1) was formed into a press sheet having a thickness of 1 mm by a hot press machine. The sheet was measured for crystallization temperature and glass transition temperature using a differential scanning calorimeter ("DSC3+" manufactured by Mettler-Toledo International, Inc.). Since heat is generated when crystallization occurs, the crystallization temperature was evaluated from the exothermic peak. In addition, since the baseline is shifted when glass transition occurs, the glass transition temperature was evaluated from the baseline shift.

### (Example 2: Synthesis of Polyester Plasticizing Agent B)

In a reaction vessel, 808 g (4.0 mol) of sebacic acid and 572 g (5.5 mol) of neopentyl glycol were charged into a four-neck flask with an internal volume of 2 liters equipped with a thermometer, a stirrer, and a reflux condenser, and the temperature was raised stepwise to 220°C while stirring under a nitrogen gas stream. Next, 410 g (2.0 mol) of hydrogenated coconut oil fatty acid and 0.1 g of tetraisopropoxy titanium as an esterification catalyst were added, and the generated water was continuously removed. After the reaction, the residue was distilled off under reduced pressure at the same temperature to obtain polyester plasticizing agent B (number average molecular weight: 1,780, viscosity: 650 mPa s, acid value: 0.5, hydroxyl value: 8.0).

A biodegradable resin composition (2) was prepared and evaluated in the same manner as in Example 1 except that the plasticizing agent B was used instead of the plasticizing agent A. The results are shown in Table 1.

### (Example 3: Synthesis of Polyester Plasticizing Agent C)

In a reaction vessel, 808 g (4.0 mol) of sebacic acid and 418 g (5.5 mol) of 1,2-propanediol were charged into a four-neck flask with an internal volume of 2 liters equipped with a thermometer, a stirrer, and a reflux condenser, and the temperature was raised stepwise to 220°C while stirring under a nitrogen gas stream. Next, 410 g (2.0 mol) of hydrogenated coconut oil fatty acid and 0.1 g of tetraisopropoxy titanium as an esterification catalyst were added, and the generated water was continuously removed. After the reaction, the residue was distilled off under reduced pressure at the same temperature to obtain polyester plasticizing agent C (number average molecular weight: 1,800, viscosity: 700 mPa·s, acid value: 0.4, hydroxyl value: 7.0).

A biodegradable resin composition (3) was prepared and evaluated in the same manner as in Example 1 except that the plasticizing agent C was used instead of the plasticizing agent A. The results are shown in Table 1.

### (Example 4: Synthesis of Polyester Plasticizing Agent D)

In a reaction vessel, 808 g (4.0 mol) of sebacic acid, 292 g (2.75 mol) of diethylene glycol, and 209 g (2.75 mol) of 1,2-propanediol were charged into a four-neck flask with an internal volume of 2 liters equipped with a thermometer, a stirrer, and a reflux condenser, and the temperature was raised stepwise to 220°C while stirring under a nitrogen gas stream. Next, 410 g (2.0 mol) of hydrogenated coconut oil fatty acid and 0.1 g of tetraisopropoxy titanium as an esterification catalyst were added, and the generated water was continuously removed. After the reaction, the residue was distilled off under reduced pressure at the same temperature to obtain polyester plasticizing agent D (number average molecular weight: 1,740, viscosity: 610 mPa·s, acid value: 0.4, hydroxyl value: 7.2).

A biodegradable resin composition (4) was prepared and evaluated in the same manner as in Example 1 except that the plasticizing agent D was used instead of the plasticizing agent A. The results are shown in Table 1.

### (Example 5: Synthesis of Polyester Plasticizing Agent E)

In a reaction vessel, 808 g (4.0 mol) of sebacic acid, 209 g (2.75 mol) of 1,2-propanediol, and 248 g (2.75 mol) of 1,3-butanediol were charged into a four-neck flask with an internal volume of 2 liters equipped with a thermometer, a stirrer, and a reflux condenser, and the temperature was raised stepwise to 220°C while stirring under a nitrogen gas stream. Next, 410 g (2.0 mol) of hydrogenated coconut oil fatty acid and 0.1 g of tetraisopropoxy titanium as an esterification catalyst were added, and the generated water was continuously removed. After the reaction, the residue was distilled off under reduced pressure at the same temperature to obtain polyester plasticizing agent E (number average molecular weight: 1,740, viscosity: 610 mPa·s, acid value: 0.4, hydroxyl value: 7.2).

A biodegradable resin composition (5) was prepared and evaluated in the same manner as in Example 1 except that the plasticizing agent E was used instead of the plasticizing agent A. The results are shown in Table 1.

### (Comparative Example 1: Preparation of Biodegradable Resin Composition (1'))

A biodegradable resin composition (1') was prepared and evaluated in the same manner as in Example 1 except that the polyester plasticizing agent A was not used. The results are shown in Table 1.

### (Comparative Example 2: Preparation of Biodegradable Resin Composition (2'))

A biodegradable resin composition (2') was prepared and evaluated in the same manner as in Example 1, except that DAIFATTY-101 (manufactured by Daihachi Chemical Industry Co., Ltd.), which is a commercially available plasticizing agent for polylactic acid and is a dibasic acid ester, was prepared and DAIFATTY 101 was used instead of the polyester plasticizing agent A. The results are shown in Table 1.

**[Table 1]**

| | Example 1 | Example 2 | Example 3 | Example 4 | Example 5 | Comparative Example 1 | Comparative Example 2 |
|---|---|---|---|---|---|---|---|
| Plasticizing agent | Polyester plasticizing agent A | Polyester plasticizing agent B | Polyester plasticizing agent C | Polyester plasticizing agent D | Polyester plasticizing agent E | - | DAIFATTY-101 (dibasic acid ester plasticizing agent) |
| Biodegradable resin | PLA | PLA | PLA | PLA | PLA | PLA | PLA |
| Tensile strength [MPa] | 59 | 62 | 58 | 59 | 60 | 70 | 55 |
| Crystallization temperature [°C] | 102 | 101 | 100 | 102 | 100 | 110 | 100 |
| Glass transition temperature [°C] | 61 | 61 | 61 | 61 | 61 | 61 | 47 |

From the results shown in Table 1, it can be seen that by adding the polyester plasticizing agent of the invention to a biodegradable resin, a plasticizing effect can be obtained and a decrease in the glass transition temperature can be prevented.

### (Example 6: Preparation of Biodegradable Resin Composition (6))

A biodegradable resin composition (6) was obtained by mixing 100 parts by mass of a polyhydroxybutyric acid-hydroxyvalerate copolymer (PHBV) and 5 parts by mass of the polyester plasticizing agent A. The obtained biodegradable resin composition (6) was evaluated in the same manner as in Example 1. The results are shown in Table 2.

### (Example 7: Preparation of Biodegradable Resin Composition (7))

A biodegradable resin composition (7) was obtained by mixing 100 parts by mass of a polyhydroxybutyric acid-hydroxyvalerate copolymer (PHBV) and 5 parts by mass of the polyester plasticizing agent B. The obtained biodegradable resin composition (7) was evaluated in the same manner as in Example 1. The results are shown in Table 2.

### (Example 8: Preparation of Biodegradable Resin Composition (8))

A biodegradable resin composition (8) was obtained by mixing 100 parts by mass of a polyhydroxybutyric acid-hydroxyvalerate copolymer (PHBV) and 5 parts by mass of the polyester plasticizing agent C. The obtained biodegradable resin composition (8) was evaluated in the same manner as in Example 1. The results are shown in Table 2.

### (Comparative Example 3: Preparation of Biodegradable Resin Composition (3'))

A biodegradable resin composition (3') was prepared and evaluated in the same manner as in Example 6 except that the polyester plasticizing agent A was not used. The results are shown in Table 2.

**Table 2]**

| | Example 6 | Example 7 | Example 8 | Comparative Example 3 |
|---|---|---|---|---|
| Plasticizing agent | Polyester plasticizing agent A | Polyester plasticizing agent B | Polyester plasticizing agent C | - |
| Biodegradable resin | PHBV | PHBV | PHBV | PHBV |
| Tensile strength [MPa] | 36 | 37 | 32 | 40 |
| Crystallization temperature [°C] | 65 | 64 | 65 | 66 |
| Glass transition temperature [°C] | -7 | -6 | -6 | -5 |

From the results shown in Table 2, it can be seen that even when the biodegradable resin is switched from the polylactic acid to the polyhydroxybutyric acid-hydroxyvalerate copolymer, the same effect as in the case of the polylactic acid is obtained.

## Claims

1. A plasticizing agent for a biodegradable resin, which is a polyester represented by the following formula (1) or (2): 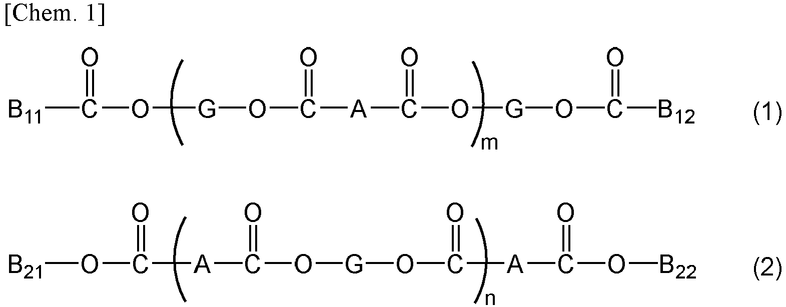 wherein
B₁₁ and B₁₂ each independently represent an aliphatic monocarboxylic acid residue having 7 to 20 carbon atoms;
B₂₁ and B₂₂ each independently represent an aliphatic monoalcohol residue having 6 to 10 carbon atoms;
G represents an alkylene glycol residue having 3 to 10 carbon atoms or an oxyalkylene glycol residue having 3 to 10 carbon atoms;
A represents an alkylene dicarboxylic acid residue having 6 to 12 carbon atoms;
m and n each represent the number of repeating units enclosed in parentheses, and m and n each independently represent an integer of 1 or more; and
A and G may be the same or different for each repeating unit enclosed in parentheses.

2. The plasticizing agent for a biodegradable resin according to claim 1, wherein A is a sebacic acid residue.

3. The plasticizing agent for a biodegradable resin according to claim 1, wherein G is a 1,2-propanediol residue, a 1,3-butanediol residue, a 1,4-butanediol residue, a neopentyl glycol residue, a 2-methyl-1,3-propanediol residue, a 3-methyl-1,5-pentanediol residue, a 1,6-hexanediol residue, or a diethylene glycol residue.

4. A plasticizing agent for a biodegradable resin, which is a polyester obtained by using an alkylene glycol having 3 to 10 carbon atoms, an alkylene dicarboxylic acid having 8 to 14 carbon atoms, and a hydrogenated vegetable oil fatty acid as reaction raw materials.

5. The plasticizing agent for a biodegradable resin according to claim 4, wherein the hydrogenated vegetable oil fatty acid is one or more selected from the group consisting of a hydrogenated coconut oil fatty acid, a hydrogenated palm kernel oil fatty acid, a hydrogenated palm oil fatty acid, a hydrogenated olive oil fatty acid, a hydrogenated castor oil fatty acid, and a hydrogenated rapeseed oil fatty acid.

6. The plasticizing agent for a biodegradable resin according to any one of claims 1 to 5, wherein the plasticizing agent has a number average molecular weight in a range of 500 to 5,000.

7. A biodegradable resin composition comprising the plasticizing agent for a biodegradable resin according to any one of claims 1 to 6 and a biodegradable resin.

8. The biodegradable resin composition according to claim 7, wherein a content of the plasticizing agent for a biodegradable resin is in a range of 1 to 30 parts by mass with respect to 100 parts by mass of the biodegradable resin.

9. The biodegradable resin composition according to claim 7 or 8, wherein the biodegradable resin is one or more selected from the group consisting of polylactic acid, polybutylene succinate, polybutylene adipate terephthalate, polyhydroxybutyric acid-hydroxyhexanoic acid, polyhydroxybutyric acid-hydroxyvalerate, polybutylene succinate adipate, and polyethylene terephthalate succinate.

10. A molded article of the biodegradable resin composition according to any one of claims 7 to 9.
